# FASCICULE DE BREVET EUROPEEN

(11) **EP 0 762 602 B1**
(45) Date de publication et mention de la délivrance du brevet: **21.04.2004**
(21) Numéro de dépôt: 96401722.2
(22) Date de dépôt: 02.08.1996
(51) Int. Cl.: H02K 3/18

(54) **Démarreur de véhicule automobile muni d'un bobinage inducteur perfectionné**
Anlasser für Kraftfahrzeug mit verbesserter Erregerspule
Starter for motor vehicle comprising an improved field coil

(30) Priorité: 08.08.1995 FR 9509708
(43) Date de publication de la demande: 12.03.1997
(73) Titulaire: VALEO EQUIPEMENTS ELECTRIQUES MOTEUR, 94000 Créteil (FR)
(72) Inventeur: Laffont, Jean, 38200 Vienne (FR); Tcheng, Yvon, 69960 Corbas (FR); Verot, Jacques, 69002 Lyon (FR)
(74) Mandataire: Kohn, Philippe

(56) Documents cités:
- DE-B- 1 151 306
- FR-A- 1 317 071
- FR-A- 2 280 227
- FR-A- 2 369 717

## Description

L'invention concerne un démarreur de véhicule automobile.

L'invention concerne plus particulièrement un démarreur de véhicule automobile, du type comportant un bobinage inducteur statorique qui comporte quatre enroulements formant chacun un pôle magnétique, du type dans lequel les enroulements sont reliés de manière à former deux circuits électriques parallèles dont les entrées sont reliées à un câble d'alimentation commun et dont chacune des sorties est munie d'un balai frottant sur un collecteur tournant d'un bobinage induit rotorique, du type dans lequel chaque enroulement est constitué d'un fil conducteur de forte section enroulé à plat de manière à former des spires jointives concentriques, du type dans lequel les enroulements sont réalisés par paires d'enroulements adjacents, chaque paire comportant deux enroulements réalisés successivement en continu avec le même fil conducteur qui forme ainsi un pont de liaison reliant les spires internes des deux enroulements de la paire.

La réalisation des enroulements par paires, technique connue sous le nom de "bobines duo", permet de diminuer le nombre de soudures nécessaires à l'assemblage du bobinage inducteur, ce qui est intéressant dans la mesure ou chaque soudure nécessite une opération supplémentaire et de plus présente des problèmes de fiabilité tant au niveau de la fixation des enroulements qu'au niveau de leurs raccordements électriques.

Or, étant donnée la très forte intensité des courants parcourant le bobinage inducteur, il est souhaitable de limiter au maximum le nombre de soudures qui sont des points délicats et fragiles du circuit électrique car on ne maîtrise pas toujours la section effective du passage du courant au niveau de chaque soudure, ce qui peut entraîner la formation de points chauds.

Dans le but de proposer un bobinage inducteur de démarreur réalisé de manière simple et fiable, l'invention propose un démarreur du type vu précédemment caractérisé en ce que les deux enroulements d'une première paire sont bobinés successivement respectivement dans un premier sens et dans un second sens opposé, en ce que les enroulements de la seconde paire sont bobinés successivement dans le second et le premier sens, en ce que le câble d'alimentation commun est fixé sur le pont de liaison de la première paire d'enroulements , en ce que les extrémités libres du conducteur de la première paire d'enroulements sont reliées aux extrémités libre du conducteur de la seconde paire d'enroulements, et en ce que les deux balais sont fixés sur le pont de liaison de la seconde paire d'enroulements de manière à former quatre pôles magnétiques successifs de polarités alternées.

Selon d'autres aspects de l'invention :
- le câble commun d'alimentation est fixé par soudage sensiblement au centre du pont de liaison de la première paire d'enroulements ;
- les deux balais sont soudés chacun à une extrémité du pont de liaison de la seconde paire d'enroulements ;
- chaque enroulement est du type dans lequel la spire interne se prolonge par un rabat du conducteur qui s'étend radialement vers l'extérieur pour former un pont de liaison ;
- le fil conducteur formant les enroulements est un fil plat enroulé dans le sens de son épaisseur.

D'autres avantages de l'invention apparaîtront à la lecture de la description détaillée qui suit pour la compréhension de laquelle on se reportera aux dessins annexés dans lesquels :
- La figure 1 est une vue en coupe axiale partielle d'un démarreur de véhicule automobile ;

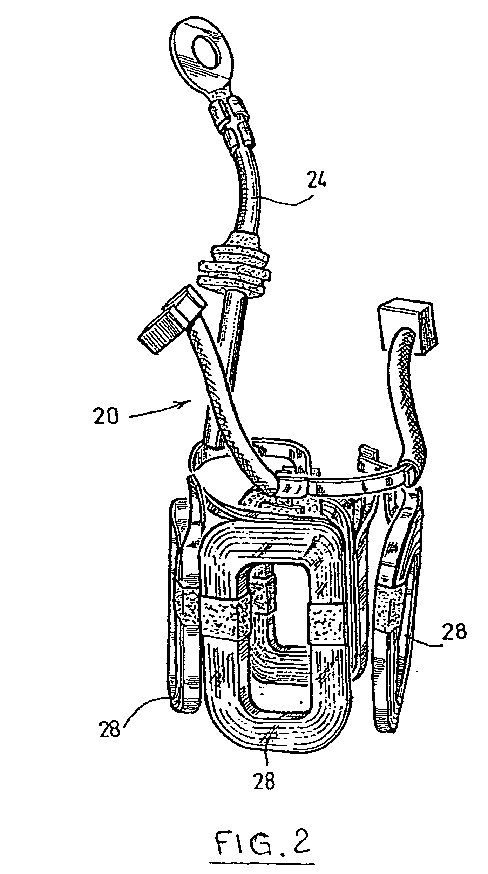

- la figure 2 est une vue en perspective du bobinage inducteur d'un démarreur conforme aux enseignements de l'invention ;
- la figure 3 est une vue schématique d'un bobinage inducteur de démarreur selon l'état de la technique, développé à plat et vu de l'intérieur ;
- la figure 4 est une vue plus détaillée en perspective d'un tel bobinage ;
- la figure 5 est une vue similaire à celle de la figure 3 représentant un bobinage inducteur conforme aux enseignements de l'invention ;
- les figures 6 et 7 sont des vues en perspective plus détaillées d'un tel bobinage, suivant deux angles de vue différents.

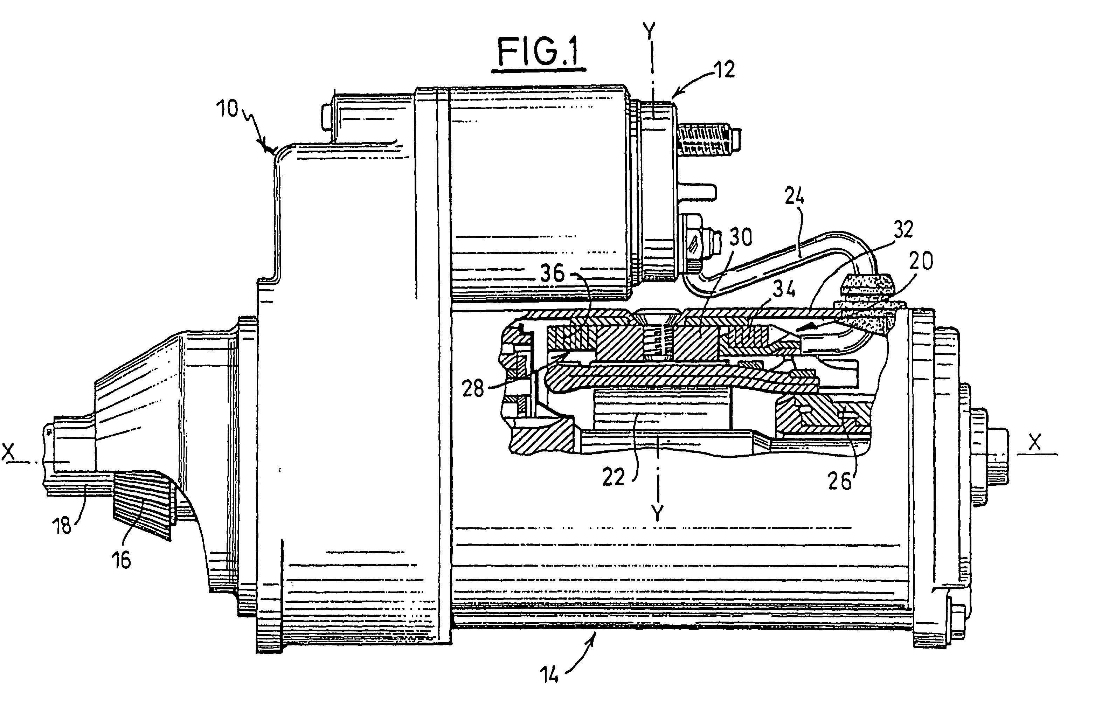

La figure 1 représente un démarreur 10 qui comporte essentiellement un contacteur 12 et un moteur de démarreur 14 destinés à entraîner un pignon de démarreur 16.

Le pignon de démarreur 16 est monté coulissant sur une extrémité de l'arbre moteur 18 du démarreur, d'axe X-X, et le pignon de démarreur 16 est prévu pour s'engrener avec une roue dentée (non représentée) d'un volant d'inertie du moteur à combustion du véhicule automobile équipé du démarreur.

Le moteur 14 du démarreur 10 comporte un bobinage inducteur statorique 20 et un bobinage induit rotorique 22 qui sont couplés électriquement en série.

Un câble d'alimentation 24 relie la sortie du contacteur 12 à l'entrée du bobinage inducteur 20 et la sortie du bobinage inducteur 20 est reliée à des balais (non représentés sur la figure 1) qui frottent sur des lames conductrices d'un collecteur 26 qui alimente le bobinage rotorique induit 22.

Le bobinage inducteur 20 comporte généralement quatre enroulements 28 qui sont enroulés chacun autour d'une masse polaire 30 vissée dans le carter cylindrique 32 du moteur 14 du démarreur.

Chaque enroulement 28 est agencé de manière que son axe d'enroulement Y-Y soit agencé radialement dans le carter 32.

Chaque enroulement 28 est composé d'un conducteur plat continu 34 dont la section est sensiblement rectangulaire et qui est enroulé dans le sens de son épaisseur, de manière à former des spires jointives concentriques 36 de diamètre croissant.

Les spires 36 sont isolées électriquement l'une de l'autre par un ruban isolant intercalé qui est enroulé simultanément avec le conducteur 34.

Selon un mode connu de réalisation des enroulements 28, on réalise deux enroulements successifs 28 avec un même conducteur 34 continu, ce qui permet de s'affranchir d'une soudure pour relier électriquement les deux enroulements 28 de la paire d'enroulements.

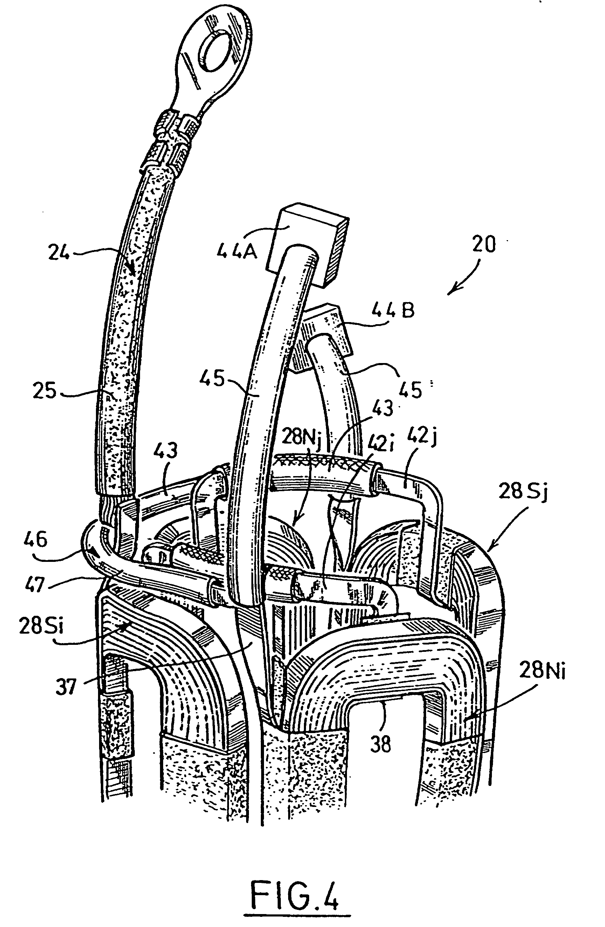

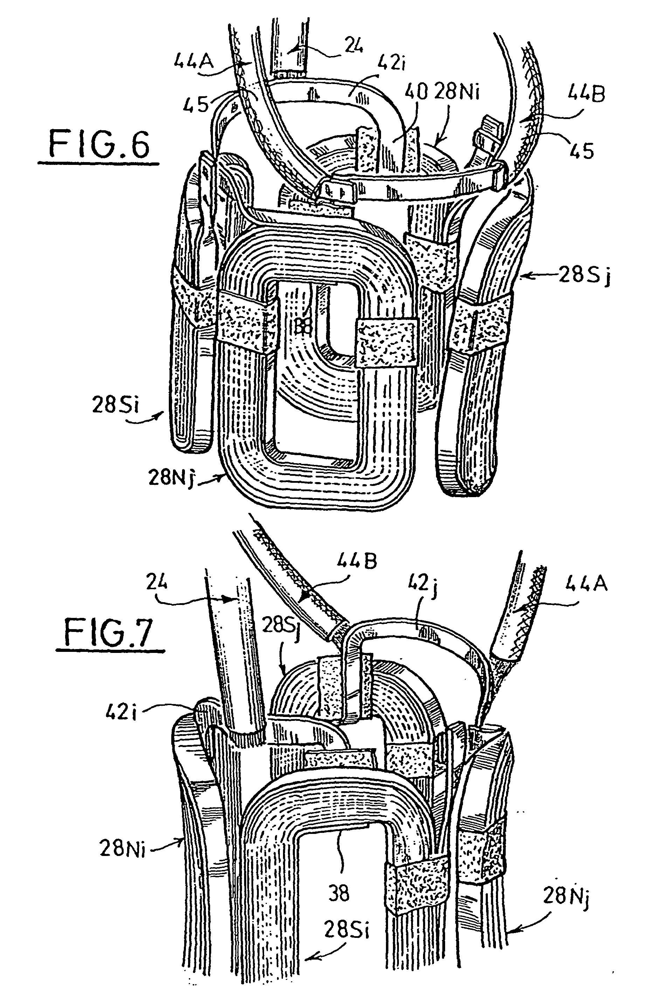

Comme on peut le voir de manière plus précise sur les figures 4, 6 et 7, chaque enroulement 28 comporte une spire interne 38 qui est prolongée par un rabat 40 du fil conducteur 34 qui s'étend radialement vers l'intérieur par rapport à l'enroulement 28 et qui est recourbé en direction du second enroulement 28 de la paire de manière à former un pont de liaison 42 entre les deux enroulements 28 de la paire.

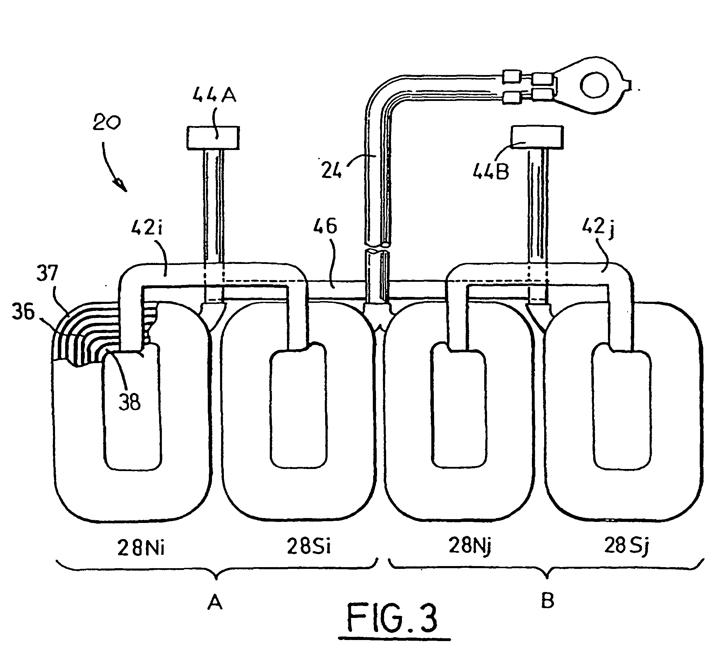

On a représenté sur la figure 3 un enroulement inducteur statorique 20 réalisé conformément aux enseignements de la technique.

Comme on peut le voir, le bobinage inducteur 20 comporte deux paires d'enroulements 28 indicées i et j.

Le câble d'alimentation 24 est commun aux deux paires i, j d'enroulements de sorte que les paires i, j d'enroulements forment chacune des circuits électriques parallèles indicés A et B dont chacun est muni, à sa sortie, d'un balai 44A, 44B destiné à frotter sur le collecteur 26.

Chaque enroulement 28 formant un pôle magnétique du moteur 14 de démarreur, il est nécessaire que les polarités de deux enroulements 28 adjacents soit opposées.

La polarité du pôle magnétique formé par un enroulement 28 est déterminée par le sens d'enroulement du conducteur 34 dans l'enroulement 28 et par le sens de parcours du courant électrique dans l'enroulement 28.

Comme on peut le voir sur la figure 3, les deux enroulements 28 d'une paire réalisée selon l'état de la technique sont enroulés dans le même sens.

Ainsi, en considérant la figure 3, les enroulements 28 de la paire i située sur la gauche, sont enroulés dans le sens anti-horaire.

De la sorte, les deux enroulements 28 devant former des pôles magnétiques de polarité opposée, ils doivent être parcourus par le courant électrique dans deux sens différents et opposés.

A cet effet, le courant électrique, qui arrive par le câble d'alimentation 24, entre dans le premier enroulement 28S de la paire i par une spire externe 37 et parcourt ainsi les spires 36 de l'extérieur vers l'intérieur de manière à former un pôle sud.

Au contraire le courant électrique entre dans le second enroulement 28N de la paire i par sa spire interne 38, après avoir franchi le pont de liaison 42i, de manière à parcourir le second enroulement 28Ni de l'intérieur vers l'extérieur, formant ainsi un pôle nord.

Le courant ressort de la paire i d'enroulements par la spire externe 37 du second enroulement 28Ni qui est relié au balai 44A.

La paire i ainsi réalisée forme donc un circuit électrique A indépendant et les deux enroulements de la paire i forment chacun un pôle magnétique sud 28Si et un pôle magnétique nord 28Ni.

La seconde paire j d'enroulements comporte elle aussi un premier enroulement 28Nj dont la spire externe 37 est reliée au câble d'alimentation commun 24 et un second enroulement 28Sj dont la spire externe 37 est relié au second balai 44b.

Un pont de liaison 42j relie les deux enroulements de la paire j.

Toutefois, afin de n'utiliser qu'un seul câble d'alimentation 24 commun pour les deux circuits électriques A et B qui correspondent aux paires i et j d'enroulements, le câble d'alimentation 24 est relié aux spires externes 37 des deux premiers enroulements 28Si et 28Nj qui sont adjacents.

Aussi, dans le but d'obtenir malgré tout deux enroulements de polarités inverses alors qu'ils sont parcourus de leurs spires externes vers leurs spires internes, il est nécessaire que ces deux enroulements soient enroulés en sens opposés.

De la sorte, les enroulements de la paire sont enroulés en sens opposés par rapport aux enroulements de la paire i, c'est-à-dire dans le sens horaire en considérant la figure 3.

Comme on peut le voir, les seconds enroulements 28Ni et 28Sj qui sont adjacents lorsque l'enroulement inducteur statorique 20 est en place dans le moteur 14, sont de polarités opposées.

Comme on l'a vu plus haut, les circuits A, B formés par les paires i, j sont indépendants et possèdent chacun leur balai 44A, 44B destiné à alimenter le collecteur 26.

Or, il est souhaitable pour le bon fonctionnement du moteur 14 que les balais 44A, 44B soient au même potentiel électrique afin de ne pas déséquilibrer le fonctionnement du moteur.

En effet, la résistance électrique de chacun des deux circuits A et B peut présenter de légères différences dues soit à des légères variations de section du fil conducteur 34 formant chacune des deux paires i et j d'enroulements soit par exemple à des résistances parasites induites par les soudures de raccordement du câble d'alimentation 24 ou des balais 44A, 44B sur chacune des paires i et j.

Aussi, un conducteur électrique est-il agencé entre la sortie de chacune des deux paires i et j d'enroulements de manière à former une liaison équipotentielle 46.

On a représenté sur la figure 4 de manière plus détaillée un bobinage inducteur 20 selon l'état de la technique.

Comme on peut le voir, les deux balais 44A, 44B qui forment la sortie électrique de chacun des deux circuits électriques A et B chevauchent, radialement vers l'extérieur, les ponts de liaisons 42i, 42j de chacune des deux paires i et j d'enroulements formant les circuits électriques A et B.

De la même manière, on voit que la liaison équipotentielle 46 longe en partie les ponts de liaison 42i, 42j et passe à proximité du câble d'alimentation 24, radialement vers l'extérieur.

Afin d'éviter tout faux contact entre ces différents éléments, il est nécessaire de prévoir des gaines d'isolation 45, 25 respectivement sur les balais 44A, 44B et sur le câble 24 mais il faut aussi prévoir des gaines d'isolation 43, 47 respectivement sur les ponts de liaison 42i, 42j et sur la liaison équipotentielle 46.

Outre la nécessité de l'adjonction de ces gaines d'isolation 43, 47, une telle conception du bobinage inducteur 20 présente l'inconvénient d'avoir des zones d'encombrement radial assez important du fait par exemple du chevauchement d'un balai 44, d'un pont de liaison 42 et de la liaison équipotentielle 46.

C'est donc dans le but de proposer une solution à ces problèmes que l'invention propose un bobinage inducteur 20 dans lequel les paires i, j d'enroulements comportent chacune deux enroulements 28 enroulés en sens opposés.

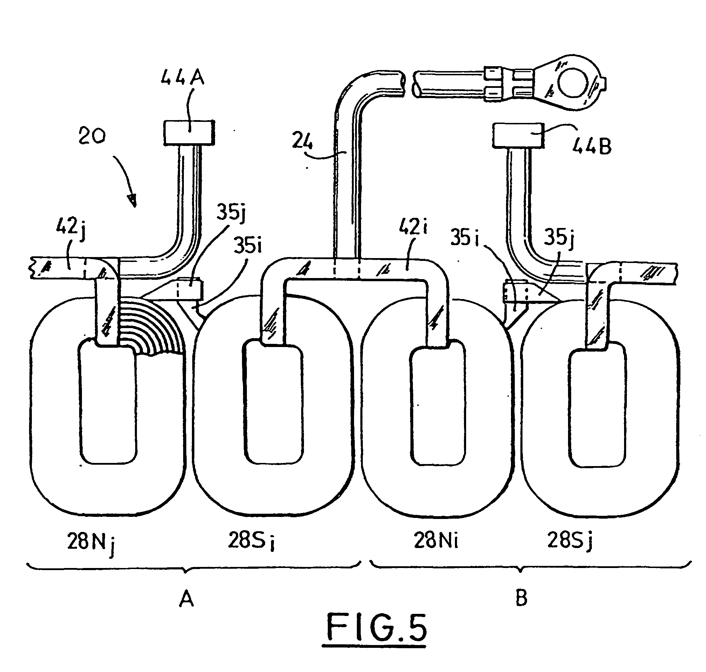

Comme on peut le voir sur la figure 5, une telle conception des paires i, j d'enroulements permet à deux enroulements d'une même paire, parcourus chacun dans le même sens par un courant électrique, c'est-à-dire par exemple de l'intérieur vers l'extérieur, ou de l'extérieur vers l'intérieur, de former deux pôles magnétiques adjacents de polarités différentes.

Ainsi, le câble d'alimentation 24 est soudé sensiblement au centre du pont de liaison 42i d'une première paire i d'enroulements qui forme ainsi deux pôles, Sud et Nord, 28Si et 28Ni.

Les deux extrémités libres 35i du conducteur 34i formant la paire d'enroulement i sont reliées aux deux extrémités libres 35j du conducteur 34j formant la seconde paire j d'enroulements.

Ainsi, chaque enroulement 28Si et 28Ni de la paire i est relié par sa spire externe 37 à la spire externe 37 d'un enroulement, respectivement 28Nj, 28Sj, de la seconde paire j d'enroulements.

Chacun des enroulements 28Sj, 28Nj de la paire j est donc parcouru par le courant électrique de sa spire externe 37 vers sa spire interne 38 et, comme ils sont enroulés en sens inverse, ils forment deux pôles magnétiques opposés adjacents.

Dans ce mode de réalisation, les deux enroulements 28Si et 28Ni de la paire i forment deux circuits électriques parallèles A, B qui sont prolongés respectivement par les enroulements 28Nj et 28Sj de la seconde paire j.

Or, la sortie de ces deux enroulements 28Nj et 28Sj, qui forment la sortie de chacun des deux circuits électriques A et B sont reliés par le pont de liaison 42j de la paire j.

Il en résulte donc que les deux balais 44A, 44B qui alimentent le rotor 26 en sortie de chacun des deux circuits A, B, sont soudés aux deux extrémités du pont de liaison 42j qui forme ainsi entre eux une liaison équipotentielle.

Comme on peut le voir sur les figures 5, 6 et 7, une telle conception d'un bobinage inducteur 20 permet d'éviter tout chevauchement de conducteurs du bobinage inducteur 20 qui seraient à des potentiels différents.

Il n'est donc nécessaire de prévoir des gaines isolantes 45, 25 que pour les balais 44A, 44B et pour le câble d'alimentation 24 qui sont eux susceptibles d'être en contact par exemple avec le carter 32 du moteur 14 de démarreur

Une autre caractéristique de l'invention est qu'elle permet de réaliser toute les soudures de manière simple car chaque soudure ne réalise l'assemblage que de deux conducteurs.

Cela n'était pas le cas précédemment puisque le câble d'alimentation 24 était relié simultanément aux spires externes 37 de deux enroulements 28Si et 28Nj de chacune des deux paires i, j d'enroulements.

## Revendications

1. Démarreur de véhicule automobile, du type comportant un bobinage inducteur statorique (20) qui comporte quatre enroulements (28) formant chacun un pôle magnétique, du type dans lequel les enroulements (28) sont reliés de manière à former deux circuits électriques (A, B) parallèles dont les entrées sont reliées à un câble d'alimentation (24) commun et dont chacune des sorties est munie d'un balai (44A, 44B) frottant sur un collecteur (26) tournant d'un bobinage induit rotorique (22), du type dans lequel chaque enroulement (28) est constitué d'un fil conducteur (34) de forte section enroulé à plat de manière à former des spires jointives concentriques (36), du type dans lequel les enroulements (28) sont réalisés par paires (i, j) d'enroulements (28) adjacents, chaque paire (i, j) comportant deux enroulements (28) réalisés successivement en continu avec le même fil conducteur (34i, 34j) qui forme ainsi un pont de liaison (42i, 42j) reliant les spires internes (38) des deux enroulements (28) de la paire (i, j), **caractérisé en ce que** les deux enroulements (28) d'une première paire (i) sont bobinés successivement respectivement dans un premier sens et dans un second sens opposé, **en ce que** les enroulements (28) de la seconde paire (j) sont bobinés successivement dans le second et le premier sens, **en ce que** le câble d'alimentation (24) commun est fixé sur le pont de liaison (42i) de la première paire (i) d'enroulements, **en ce que** les extrémités libres (35i) du conducteur (34i) de la première paire d'enroulements sont reliées aux extrémités libres (35j) du conducteur (34j) de la seconde paire (j) d'enroulements, et **en ce que** les deux balais (44A, 44B) sont fixés sur le pont de liaison (42j) de la seconde paire (j) d'enroulements de manière à former quatre pôles magnétiques successifs de polarités alternées.

2. Démarreur selon la revendication 1, **caractérisé en ce que** le câble commun d'alimentation (24) est fixé par soudage sensiblement au centre du pont de liaison (42i) de la première paire (i) d'enroulements.

3. Démarreur selon la revendication 2, **caractérisé en ce que** les deux balais (44A, 44B) sont soudés chacun à une extrémité du pont de liaison (42j) de la seconde paire (j) d'enroulements.

4. Démarreur selon l'une quelconque des revendications précédentes, **caractérisé en ce que** chaque enroulement (28) est du type dans lequel la spire interne (38) se prolonge par un rabat (40) du conducteur (34) qui s'étend radialement vers l'extérieur pour former le pont de liaison (42).

5. Démarreur selon l'une quelconque des revendications précédentes, **caractérisé en ce que** le fil conducteur (34) formant les enroulements (28) est un fil plat enroulé dans le sens de son épaisseur.

## Patentansprüche

1. Kraftfahrzeuganlasser mit einer Ständererregerspule (20), die vier jeweils einen Magnetpol bildende Wicklungen (28) umfaßt, wobei die Wicklungen (28) so verbunden sind, daß sie zwei parallele elektrische Stromkreise (A; B) bilden, deren Eingänge mit einem gemeinsamen Speisekabel (24) verbunden sind und deren Ausgänge jeweils mit einer Kohlebürste (44A, 44B) versehen sind, die an einem rotierenden Kommutator (26) einer Läuferankerwicklung (22) schleifen, wobei jede Wicklung (28) aus einem Leitungsdraht (34) mit großem Querschnitt besteht, der flach gewickelt ist, so daß konzentrische aneinanderstoßende Windungen (36) gebildet werden, wobei die Wicklungen (28) durch Paare (i, j) benachbarter Wicklungen (28) ausgeführt sind, wobei jedes Wicklungspaar (i, j) zwei Wicklungen (28) umfaßt, die nacheinander durchgehend mit dem gleichen Leitungsdraht (34i, 34j) ausgeführt sind, der dadurch eine Verbindungsbrücke (42i, 42j) bildet, welche die inneren Windungen (38) der beiden Wicklungen (28) des Wicklungspaars (i, j) verbindet, **dadurch gekennzeichnet, daß** die beiden Wicklungen (28) eines ersten Wicklungspaars (i) nacheinander in einer ersten Richtung bzw. in einer entgegengesetzten zweiten Richtung gewickelt werden, daß die Wicklungen (28) des zweiten Wicklungspaars (j) nacheinander in der zweiten und in der ersten Richtung gewickelt werden, daß das gemeinsame Speisekabel (24) an der Verbindungsbrücke (42i) des ersten Wicklungspaars (i) befestigt ist, daß die freien Enden (35i) des Leiters (34i) des ersten Wicklungspaars mit den freien Enden (35j) des Leiters (34j) des zweiten Wicklungspaars (j) verbunden sind und daß die beiden Kohlebürsten (44A, 44B) an der Verbindungsbrücke (42j) des zweiten Wicklungspaars (j) so befestigt sind, daß vier aufeinanderfolgende Magnetpole mit abwechselnden Polungen gebildet werden.

2. Anlasser nach Anspruch 1, **dadurch gekennzeichnet, daß** das gemeinsame Speisekabel (24) durch Löten in etwa in der Mitte der Verbindungsbrücke (42i) des ersten Wicklungspaars (i) befestigt ist.

3. Anlasser nach Anspruch 2, **dadurch gekennzeichnet, daß** die beiden Kohlebürsten (44A, 44B) jeweils an einem Ende der Verbindungsbrücke (42j) des zweiten Wicklungspaars (j) angelötet sind.

4. Anlasser nach einem der vorangehenden Ansprüche, **dadurch gekennzeichnet, daß** es sich bei jeder Wicklung (28) um eine Ausführung handelt, bei der die innere Windung (38) durch eine Umstülpung (40) des Leiters (34) verlängert wird, die sich radial nach außen erstreckt um die Verbindungsbrücke (42) zu bilden.

5. Anlasser nach einem der vorangehenden Ansprüche, **dadurch gekennzeichnet, daß** es sich bei dem die Wicklungen (28) bildenden Leitungsdraht (34) um einen in Richtung seiner Dicke gewickelten Flachdraht handelt.

## Claims

1. A motor vehicle starter, of the type comprising an inductive stator winding (20) having four coils (28), each constituting a magnetic pole, of the type in which the coils (28) are so connected as to constitute two parallel electrical circuits (A, B), the input ends of which are connected to a common power supply cable (24), with each of the output ends of the coils being provided with a brush (44A, 44B) which is in rubbing contact on a rotary commutator (26) of a rotor armature winding (22), of the type in which each coil (28) consists of a conductive wire (34) of large cross section which is wound flat in such a way as to form concentric turns (36) overlaid on each other, and of the type in which the coils (28) are constructed in pairs (i, j) of adjacent coils (28), each pair (i, j), comprising two coils (28) formed in succession and continuously with the same conductive wire (34i, 34j) which therefore constitutes a connecting bridge (42i, 42j) connecting together the internal turns (38) of the two coils (28) of the pair (i, j), **characterised in that** the two coils (28) in a first pair (i) are wound in succession, in a first direction and in.an opposite second direction respectively, **in that** the coils (28) of the second pair (j) are wound in succession in the second and the first direction, **in that** the common power cable (24) is fixed on the connecting bridge (42i) of the first pair (i) of coils, **in that** the free ends (35i) of the conductor (34i) of the first pair of coils are connected to the free ends (35j) of the conductor (34j) of the second pair (j) of coils, and **in that** the two brushes (44A, 44B) are fixed on the connecting bridge (42j) of the second pair (j) of coils, whereby to constitute four successive magnetic poles of alternate polarities.

2. A starter according to Claim 1, **characterised in that** the common power cable (24) is welded substantially to the centre of the connecting bridge (42i) of the first pair (i) of coils.

3. A starter according to Claim 2, **characterised in that** the two brushes (44A, 44B) are each welded to one end of the connecting bridge (42j) of the second pair (j) of coils.

4. A starter according to any one of the preceding Claims, **characterised in that** each coil (28) is of the type in which the internal turn (38) is extended by a rabbet of the conductor (34) which extends radially outwards to constitute the connecting bridge (42).

5. A starter according to any one of the preceding Claims, **characterised in that** the conductive wire (34) constituting the coils (28) is a flat wire wound in the direction of its thickness.
